**Europäisches Patentamt**

**European Patent Office**

**Office européen des brevets**

(19)

(11) Veröffentlichungsnummer: **0 310 608 B1**

(12) **EUROPÄISCHE PATENTSCHRIFT**

(45) Veröffentlichungstag der Patentschrift :
18.09.91 Patentblatt 91/38

(51) Int. Cl.⁵ : **B01J 21/18, B01D 53/36**

(21) Anmeldenummer : 87903312.4

(22) Anmeldetag : 22.05.87

(86) Internationale Anmeldenummer :
PCT/EP87/00269

(87) Internationale Veröffentlichungsnummer :
**WO 87/07852 30.12.87 Gazette 87/29**

(54) VERFAHREN ZUR HERSTELLUNG EINES AKTIVKOHLEKATALYSATORS.

(30) Priorität : 18.06.86 DE 3620425

(43) Veröffentlichungstag der Anmeldung :
12.04.89 Patentblatt 89/15

(45) Bekanntmachung des Hinweises auf die
Patenterteilung :
18.09.91 Patentblatt 91/38

(84) Benannte Vertragsstaaten :
DE FR IT NL

(73) Patentinhaber : Bergwerksverband GmbH
Franz-Fischer-Weg 61
W-4300 Essen 13 (DE)

(72) Erfinder : JÜNTGEN, Harald
Bonscheidter Str. 79
W-4300 Essen (DE)
Erfinder : KNOBLAUCH, Karl
Semperstr. 55
W-4300 Essen (DE)
Erfinder : RICHTER, Ekkehard
Schmachtenbergstr. 89
W-4300 Essen 18 (DE)
Erfinder : KÜHL, Helmut
Steeler Str. 540
W-4300 Essen 14 (DE)

**Beschreibung**

Die Erfindung betrifft ein Verfahren zur Herstellung eines Aktivkohlekatalysators gemäß dem Oberbegriff des Anspruchs 1.

Es ist bekannt, die katalytische Aktivität von Aktivkohle durch Behandlung mit Ammoniak bei hohen Temperaturen zu verbessern. So hat H.P. Böhm (Fuel, 1984, Vol. 63, Seite 1061-1063) gefunden, daß die Behandlung von Aktivkohle mit Ammoniak oder Blausäure bei Temperaturen oberhalb von 600°C die katalytische Aktivität der Aktivkohle bei Oxidationsreaktionen in der wäßrigen Phase erhöht. Diese Aktivkohlen haben jedoch den Nachteil, daß sie sehr schnell desaktivieren.

Aus der US-PS 4210628 ist ein Verfahren zur Entfernung von Stickoxiden aus Abgasen mit Ammoniak bekannt, in dem Aktivkohle als Katalysator verwendet wird. Bei Anwesenheit von Schwefeloxiden in den Abgasen bilden sich auf dem Katalysator Ammoniumsulfat und Schwefelsäure. Der desaktivierte Katalysator wird deshalb regeneriert z.B. durch Erhitzung auf Temperaturen zwischen 350 und 800°C in einem Inertgasstrom. Der regenerierte Katalysator zeigt eine Verbesserung der katalytischen Aktivität. Eine Vorbehandlung des Katalysators vor seinem Einsatz in dem Verfahren zur Entfernung von Stickoxiden wird nicht offenbart.

Der Erfindung liegt die Aufgabe zugrunde, einen Aktivkohlekatalysator herzustellen, der eine geringe Desaktivierung aufweist.

Diese Aufgabe wird erfindungsgemäß dadurch gelöst, daß Aktivkohle oder Aktivkoks mit einer wäßrigen Lösung von Ammoniumsulfat getränkt, bei 120°C getrocknet und anschließend auf Temperaturen oberhalb von 350°C in einem Inertgasstrom erhitzt wird, bis keine $SO_2$-Entwicklung mehr stattfindet.

Gemäß einer Weiterbildung wird die wäßrige Lösung von Ammoniumsulfat mit Schwefelsäure versetzt.

Durch eine Wiederholung der beschriebenen Behandlung kann die katalytische Aktivität noch weiter gesteigert werden. Es können alle handelsüblichen Aktivkohlen und auch die nicht aktivierten Aktivkohlevorprodukte (Aktivkokse) eingesetzt werden.

Die so hergestellten Katalysatoren eignen sich vorteilhaft für alle katalytischen Reduktions- und Oxidationsreaktionen, die an Aktivkohlen ablaufen, wie z.B. die Reduktion von Stickoxiden mit $NH_3$, die Oxidation von $H_2S$ mit Luftsauerstoff zu elementarem Schwefel und die $SO_2$-Oxidation mit Luftsauerstoff und Wasserdampf zu $H_2SO_4$.

Besonders vorteilhaft ist die Verwendung der hergestellten Katalysatoren für die Entfernung von Stickoxiden aus Abgasen mit Ammoniak nach folgender Summengleichung :

$$4\,NO + 4\,NH_3 + O_2 \rightarrow 4\,N_2 + 6\,H_2O$$

Bei dieser Reaktion fungiert der erfindungsgemäß hergestellte Aktivkohlekatalysator sowohl als Reduktions- als auch als Oxidationskatalysator. In einem ersten Schritt erfolgt die Oxidation von NO mit Luftsauerstoff zu $NO_2$, das dann zusammen mit weiterem NO durch Ammoniak zu Stickstoff und Wasser reduziert wird.

Durch das erfindungsgemäße Herstellungsverfahren ist es gelungen, in die Aktivkohle katalytisch aktiven Stickstoff einzubauen, der selbst durch eine Temperung bei 900°C nicht entfernt werden kann.

Erfolgt der Stickstoffeinbau in die Aktivkohle durch die aus dem Stand der Technik bekannte Behandlung mit Ammoniak, so desaktivieren die Aktivkohlen bei der katalytischen $NO_x$-Reduktion. Nach etwa 5-7 h Versuchsdauer konnte in einem Vergleichsversuch kein Unterschied zwischen einer mit Ammoniak behandelten Aktivkohle und einer unbehandelten Aktivkohle mehr festgestellt werden.

Beispiel 1

Eine Aktivkohle mit einer spezifischen Oberfläche nach BET (DIN 66131) von 800 m²/g wird mit einer gesättigten Ammoniumsulfatlösung, die mit 5 bzw. 15 Gew.-% Schwefelsäure versetzt wurde, bei Raumtemperatur getränkt, über Nacht bei 120°C getrocknet und anschließend bei 420°C im Stickstoffstrom erhitzt. Nach 1,5 h fand keine $SO_2$-Entwicklung mehr statt.

Beispiel 2

Eine Aktivkohle mit einer spezifischen Oberfläche nach BET (DIN 66131) von 1350 m²/g wird mit einer gesättigten Ammoniumsulfatlösung, die mit 10 Gew.-% Schwefelsäure versetzt wurde, bei Raumtemperatur getränkt, über Nacht bei 120°C getrocknet und anschließend 1,5 h bei 420°C im Stickstoffstrom erhitzt.

### Beispiel 3

Die Aktivkohle aus Beispiel 1 wird mit einer gesättigten Ammoniumsulfatlösung getränkt, bei 120°C getrocknet und anschließend 1,5 h bei 420°C im Stickstoffstrom erhitzt.

Die Behandlung wird zweimal bzw. viermal durchgeführt.

### Beispiel 4

200 ml der nach den Beispielen 1 bis 3 hergestellten Aktivkohlekatalysatoren und die Ausgangsprodukte werden in einem Reaktor mit einer lichten Weite von 55 mm und einer Höhe von 400 mm auf ihre katalytische Aktivität bezüglich der NO-Reduktion mit Ammoniak getestet. Die Versuchstemperaturen liegen zwischen 100 und 160°C. Die Eingangskonzentrationen an Wasserdampf betragen 10 Vol.-% und an Sauerstoff 5 Vol.-%. Die Kontaktzeit beträgt 6 sec. Die Konzentration an NO beträgt 490 vpm und die $NH_3$-Konzentration 585 bzw. 835 vpm. Die Ergebnisse sind in der Tabelle zusammengefaßt. Der Umsatz an NO wurde nach 24 h bestimmt. Von dem Katalysator aus Beispiel 1 (15 Gew.-% $H_2SO_4$-Behandlung) wurde die katalytische Aktivität zusätzlich noch nach 2 Wochen Versuchsdauer bestimmt.

| Katalysatoren | $Co_{NH_3}$ (vpm) | T (°C) | $U_{NO}$ (%) | $NH_3/NO$ |
|---|---|---|---|---|
| Ausgangsaktivkohle aus Beispiel 1 | 835 | 100 | 65 | 1,2 |
| | | 120 | 71 | 1,2 |
| | | 160 | 80 | 1,3 |
| | 585 | 100 | 59 | --- |
| | | 120 | 67 | 1,3 |
| | | 160 | 71 | 1,2 |
| Katalysator aus Beispiel 1 (5 Gew.-% $H_2SO_4$) | 835 | 100 | 87 | 1,2 |
| | | 120 | 93 | 1,1 |
| | | 130 | 95 | 1,1 |
| | 585 | 100 | 80 | 1,2 |
| Katalysator aus Beispiel 1 (15 Gew.-% $H_2SO_4$) | 835 | 100 | 88 | 1,3 |
| | | 120 | 95 | --- |
| | | 130 | 99 | 1,1 |
| | 585 | 100 | 81 | 1,2 |
| | | **100 | 82 | 1,1 |
| Ausgangsaktivkohle aus Beispiel 2 | 835 | 100 | 41 | 1,2 |
| Katalysator aus Beispiel 2 (10 Gew.-% $H_2SO_4$) | 835 | 100 | 70 | 1,1 |
| Katalysator aus Beispiel 3 (2 x behandelt) | 835 | 100 | 79 | 1,1 |
| | | 120 | 84 | 1,1 |
| | | 160 | 92 | 1,1 |
| Katalysator aus Beispiel 3 (4 x behandelt) | 835 | 100 | 84 | 1,3 |
| | | 120 | 92 | 1,1 |
| | | 150 | 98 | 1,1 |
| | 585 | 100 | 81 | 1,2 |

$Co_{NH_3}$ = Eintrittskonzentration an $NH_3$

$U_{NO}$ = Umsatz an NO

$NH_3/NO$ = Verhältnis der umgesetzten Mole $NH_3$ zu den umgesetzten Molen NO

** = Ergebnis Dauerversuch 2 Wochen

Aus den Versuchsergebnissen ist ersichtlich, daß durch die erfindungsgemäße Vorbehandlung eine Steigerung der katalytischen Aktivität eintritt. So wird der Umsatz an NO der Ausgangsaktivkohle aus Beispiel 1 bei z.B. der Reaktionstemperatur von 100°C von 65 (835 vpm NH$_3$) bzw. 59% (585 vpm NH$_3$) auf 87% bzw. 80% erhöht.

Bei der hochaktivierten Aktivkohle aus Beispiel 2 erhöht sich der Umsatz an NO bei gleichen Versuchsbedingungen von 41% auf 70%. Durch eine Wiederholung der Vorbehandlung ist eine weitere Steigerung des Umsatzes an NO auf z.B. 79% bzw. 84% möglich (Katalysator aus Beispiel 3). Die Aktivkohlekatalysatoren zeigten auch nach zwei Wochen Versuchsdauer keine Desaktivierung.

## Patentansprüche

1. Verfahren zur Herstellung eines Aktivkohlekatalysators, durch Ammoniakbehandlung von Aktivkohle bei hohen Temperaturen, <u>dadurch gekennzeichnet</u>, daß Aktivkohle oder Aktivkoks mit einer wäßrigen Lösung von Ammoniumsulfat getränkt, bei 120°C getrocknet und anschließend auf Temperaturen oberhalb von 350°C in einem Inertgasstrom erhitzt wird, bis keine SO$_2$-Entwicklung mehr stattfindet.

2. Verfahren nach Anspruch 1, <u>dadurch gekennzeichnet</u>, daß die wäßrige Lösung von Ammoniumsulfat mit Schwefelsäure versetzt wird.

## Claims

1. Process for the production of an activated coal catalyst by ammonia treatment of activated coal at high temperatures **characterized in that** activated coal or activated coke is impregnated with an aqueous solution of ammonia sulphate, dried at 120°C and then heated to temperatures above 350°C in an inert gas flow until no further SO$_2$ production takes place.

2. Process as described in claim 1 **characterized in that** the aqueous solution of ammonia sulphate is mixed with sulphuric acid.

## Revendications

1. Procédé de préparation d'un catalyseur au charbon activé par le traitement à l'ammoniac de charbon activé à de hautes températures, caractérisé en ce que l'on imprègne du charbon activé ou du coke activé d'une solution aqueuse de sulfate d'ammonium, on le sèche à 120°C et on le chauffe ensuite à des températures supérieures à 350°C sous un courant de gaz inerte jusqu'à ce qu'il ne se dégage plus de SO$_2$.

2. Procédé suivant la revendication 1, caractérisé en ce que l'on ajoute de l'acide sulfurique à la solution aqueuse de sulfate d'ammonium.